# EUROPEAN PATENT SPECIFICATION

(11) **EP 3 402 926 B1**
(45) Date of publication and mention of the grant of the patent: **11.03.2020**
(21) Application number: 17700418.1
(22) Date of filing: 13.01.2017
(51) Int. Cl.: E01C 7/30, E01C 11/22

(54) **ROAD SURFACING COMPOSITION**
STRASSENBELAGSMISCHUNG
COMPOSITION DE REVÊTEMENT ROUTIER

(30) Priority: 15.01.2016 EP 16151551
(43) Date of publication of application: 21.11.2018
(73) Proprietor: Allnex Netherlands B.V., 4612 RB Bergen op Zoom (NL)
(72) Inventor: MESTACH, Dirk Emiel Paula, 2560 Nijlen (BE); MEIJER, Remco, 4423 AP Schore (NL); BRUINS SLOT, Bastiaan Ingmar Hendrik, 3543 ED Utrecht (NL); VAN MONTFORT, Jo, 3680 Maaseik (BE)
(74) Representative: Destryker, Elise Martine
(86) International application number: PCT/EP2017/050702
(87) International publication number: WO 2017/121869

(56) References cited:
- EP-A2- 2 357 280
- CH-A5- 569 151
- DE-A1-102008 030 954
- US-A1- 2007 223 998

## Description

The invention relates generally to a road surfacing composition comprising hard particles (aggregate) and a binder, to a method for the manufacture thereof, to a method for the preparation of a road surfacing, to silent and water permeable road surfacing and multilayer road surfacing. The invention also relates to the use of a specific polyurethane binder system for road surfacing.

Road administrations face a challenge to control road traffic noise. Growing public awareness of the annoyance caused by the noise and the adverse effects on citizen health and real estate value imply urgent needs for developing and applying noise reducing road surfacing. Legal regulations impose increasing requirements on road noise reduction in particular in highways near urban areas. It is expected that noise pollution from road around the big cities will soon exceed legal requirements and additional noise reduction measures will be required. To date, none of the commercial available "ready-to-use" products are able to provide the magnitude of noise reduction that is required. Therefore there is a need for road surfacing compositions that reduce road traffic noise effectively.

Conventional road surfacing includes various materials, such as asphalt, concrete and other like materials. US2013216308 describes a method of forming a road surfacing using pulverized soil that is combined with at least one polyurethane precursor (precursors being the components that form the polyurethane). When multiple polyurethane precursors are used, these precursors may be combined before, during or after being introduced into the pulverized soil. For example, an isocyanate may be mixed with a polyol in a batch mixer or using an in-line mixer prior to dispensing the mixture into the pulverized in situ soil. After application of the surfacing composition, the layer is compacted. This results in a surface that is free of pores with a surface that is smooth and impermeable to water. The noise reduction characteristics of this road surfacing are not satisfactory.

In CH569151, DE102008030954 and EP2357280, porous road surfacing compositions are described that comprise a hard aggregate and polymeric binders including polyurethanes or polyurethane precursors and have desirably a high porosity in view of water permeability. However, their properties in terms of noise reduction and durability of mechanical and acoustic properties, are not satisfactory.

In EP1052333 and WO9525076 the problem of noise generation has been addressed by providing a reduced noise elastic surfacing material, comprising: a hard aggregate; an elastic aggregate; and a two-component urethane binder, consisting of an isocyanate group terminated prepolymer and a polyol which bonds the hard aggregate and the elastic aggregate together. The elastic aggregate are rubber chips, each having a grain diameter of 10 mm or less. Although a noise reduction is obtained in fresh road surfacing, the disadvantage is that the noise level reduction is not maintained for sufficiently long time and also that the road surface is not durable and frequent repairs or even renovation of the surface layer is needed which is expensive and very disturbing for traffic.

Thus, there is still a need for a silent and durable road surfacing.

The present invention addresses these problems by providing a road surfacing composition for the preparation of a silent and water-permeable road surfacing according to claim 1. The road surfacing composition comprises: a) hard particles A, b) a two-component polyurethane binder system P which after curing has a crosslink density X, defined as the number of moles of elastically effective network chains per volume, between 0.1 and 2, preferably between 0.1 and 1.7 and more preferably between 0.1 and 1.5 mmoles/cm³, said road surfacing composition having a porosity of at least 10, preferably at least 15, more preferably at least 20 % (open volume relative to the total volume of the composition). Most preferably porosities are as high as at least 25, 30 or even at least 35 vol%.

To create porosity in the road pavement composition, the volume of the two component polyurethane binder system P added to the hard particles is preferably as low as possible and less than 80, 70, 60 or 50 % but more preferably less than 40, 30 or even 20% of the total bulk free volume of the hard particles A (determined as the volume percentage of an amount of water that can be added to a volume of hard particles).

The road surfacing composition of the invention comprises:
a) 80 - 98 wt% of a hard particles A,
b) 2 - 20 wt% of the two component polyurethane binder system comprising a polyol P1, a polyisocyanate P2 and optionally polyurethane precursors,
c) 0 - 10 wt% additives other than a) or b),
the sum of wt% of a) to c) being 100 wt%.

It was shown that a significant improvement of noise reduction can be achieved even in the absence of elastics particles. Furthermore it is believed that the achieved noise reduction is maintained over a longer time and that the road surfacing is also more durable and needs fewer repairs.

Without wishing to be bound by theory it is believed that the cause for damage is a pumping action of water due to larger deformations in the road surface layer due to the elasticity introduced by the elastic particles, which can cause high internal stresses and by consequence damage to the road surface. Further it is believed that the elasticity of the elastic particles reduces over time due to weathering and frequent high compression forces, causing irreversible deformation to the road surface leading to a lowering of the noise reduction and damage. It is further believed that the road surfacing according to the invention is more fuel efficient because it lacks this high elastic behavior.

It is further surprising that sufficiently good mechanical properties (hardness, low compressibility, toughness) could be obtained while using a relatively low amount of the polyurethane binder system. It is believed that due to a relatively low particle size and a relatively low initial viscosity of the two component (2K) polyurethane binder system components before curing, compared to for example asphalt, the polyurethane binder system is building liquid bridges due to capillary action where particles are in contact, which on curing form strong polymer connections between the particles even at low amounts. The Initial viscosity of the polyurethane binder system is measured just after mixing the crosslinkable components because due to the crosslinking the viscosity will go up as a function of time.

The two-component polyurethane binder system has after curing a crosslink density X, defined as the number of moles of elastically effective network chains per volume, between 0.1 and 2, preferably between 0.1 and 1.7 and more preferably between 0.1 and 1.5 mmoles/cm³ which is important in view of the balance of road surfacing properties as described. The polyurethane in CH 569151 is a one-component moisture or acid-curing urethane pre-polymer and the particle wetting and hardening of such one-component polyurethanes is problematic. The polyurethane in DE 10 2008 030 954 A1 is a highly crosslinked two-component binder wherein the polyol part is made up of a mixture of an oleochemical polyol, a diol with a hydroxyl value of 400 to 2,000 mg KOH/g and a polyol with a functionality of 3 to 5 with a hydroxyl value of 200 to 2,000 mg KOH/g. Because of the very high hydroxy values and resulting cross-link density, resulting in a high hardness of the binder and the noise reducing effect, the durability of the noise reducing effect and also the mechanical durability of the road paving are compromised.

The road surfacing composition of the invention provides a significant noise reduction of about 9.5 dB compared to dense asphalt concrete road surfacing, which is also a significant improvement over porous asphalt DLPAC (2 layer porous asphalt concrete) which has only 6.7 dB noise reduction compared to dense asphalt concrete. Further, because of the porosity water easily permeates through the road surfacing layer which not only improves safety for the traffic but also reduces damage from water pressure cavitation and allows dust and chemicals to wash from the road surface, thus further improving the traffic safety and durability of the noise reduction and of the mechanical properties of the road surfacing.

Further it has been found that the curing rate of the polyurethane binder system, in particular the polyurethane binder system, can be chosen high and the time-to-use can be much shorter than the recommended time-to-use of asphalt road surfacing (1 to 2 days). The road surfacing layer can quickly develop sufficiently high compressive strength to allow traffic on the fresh road surfacing; even within 8 hours, preferably overnight. This is also advantageous for use in resurfacing of existing roads.

In another aspect the invention relates to a process for preparing a road surfacing comprising making a road surfacing composition and applying a layer of said composition preferably on a porous road substrate and to the resulting multilayer road surface as will be described in more detail below. In yet another aspect the invention also relates to use of biobased polyol polymers in road surfacing compositions.

The invention relates to novel road surfacing compositions as described above which, as opposed to prior art silent road surfacing compositions, do not substantially incorporate elastic particles like rubber crumb and rely on porosity and do not rely on elastic particles for noise reduction. The term "roads" is used in this specification to include highways, tracks, bridges, car parks, aircraft landing strips and any other ground areas which may be subjected to vehicular or other heavy use traffic.

The polyurethane binder system is crosslinkable, preferably at ambient temperatures, so it can be used and cured without substantially heating the composition which allows energy saving. The preferred 2K polyurethane binder systems comprise a crosslinkable polymer and a crosslinking agent that react at ambient temperatures, typically between about 0 - 50°C, to form a crosslinked polyurethane binder matrix that firmly binds the hard particles. The polyurethane binder system is low viscous which allows good wetting and binding of the hard particles even at relatively low amounts.

The preferred compositions of this invention are composed of
a) 85 - 97.5, preferably 90 - 97.5 and more preferably 92 - 97 wt% of a hard particles A,
b) 2.5 - 15, preferably 2.5 - 10 and more preferably or 3 - 8 wt% of the two component polyurethane binder system comprising a polyol P1, a polyisocyanate P2 and optionally polyurethane precursors.

In the light of this invention polyurethane polymers are defined as thermosetting polymers composed of organic units joined by urethane and optional also urea links. The polyurethane polymer is formed in situ after the road surfacing composition has been applied to the substrate. The polyurethane polymer binder system is a 2K system crosslinkable at ambient temperature conditions and the polyurethane binder components are mixed with the hard particles shortly before use, i.e. shortly before applying a layer of the road surfacing composition on a road surface. Optional polyurethane precursors can be present which also react in the curing reaction to become included in the cured polyurethane.

Porosity is determined according to EN 12697-6 and Porosity (P) is defined as: P = 1 - (dimensional bulk density / dry bulk density). Where dimensional bulk density = dry mass / volume and dry bulk density = dry mass / (dry mass - mass under water) ^{∗} density of water. The road surfacing composition of this invention has a preferred porosity after curing of at least 10 %, preferably at least 15, more preferably at least 20, most preferably at least 25, 30 or even at least 35 vol%. Porosities of 40 vol% have been achieved. However, in view of achieving acceptable mechanical properties like compression strength etc. as described below, a minimum amount of 2.5 wt% of polyurethane binder must be present and porosity is preferably between 25 and 47, more preferably 30 - 40 vol%.

It is believed that due to the use of a very low amount of polyurethane binder the cured road surfacing not only has a high porosity but also has a very high connectivity of the pores. So the pore volume is not occluded pore volume but highly interconnected pore volume. This is believed to be important for noise reduction but it also results in that the road surface is highly permeable for liquids.

The hard particles, also referred to in the technical field as aggregate, typically is an inorganic particulate material, for example sand, gravel, crushed stone or rock, slag, recycled concrete or geosynthetic aggregates. Preferably the origin of the aggregate is crushed rocks with igneous rock and metamorphic rock being most preferred.

Igneous rock is formed through the cooling and solidification of magma or lava. Examples are granite, diorite, gabbro, peridotite, diabase, rhyolite, andesite, basalt and komatiite.

Metamorphic rocks arise from the transformation of existing rock types, in a process called metamorphism. The original rock (protolith) is subjected to heat (temperatures greater than 150 to 200 °C) and pressure (1500 bars), causing profound physical and/or chemical change. The protolith may be a sedimentary rock, an igneous rock or another older metamorphic rock. Examples of methamorphic rocks are gneiss, slate, marble, schist, and quartzite. The preferred rock belongs to the basalt group as defined by BS 812. This includes andesite, basalt, basic porphyrite, diabase, dolerite, lamprophyre, quartz-dolerite and spilite. Crushed basalt rock is preferred.

Such hard particles useful for the invention have a fracture strength of at least 40, preferably at least 60 or even 80 MPa, up to about 400 MPa (measured by loading a small rock core at a rate of 0.7 MPa/s until it fails brittle). The fracture strength is given as the maximum stress necessary to induce failure of the rock core (Attewell & Farmer 1976).

The hard particles preferably have an average particle size between 0.5 and 8 mm, but are preferably small between 1 and 6 and more preferably between 2 and 4 mm. Preferably, the particle size distribution is relatively small and therefore at least 80, preferably at least 90 wt% of the particles have a size between 1 and 6, more preferably between 2 and 4 mm.

In order to obtain the aggregate, the rock is crushed and sieved in order to obtain various particle size classes. Particle size classes that can be used in the present invention are those as outlined in EN13043. Sizes are described in terms of a lower limiting sieve size, "small" d, and an upper limiting sieve size, "big" D written as d/D. The sizes of both small d and big D are selected from a list of prescribed sieve sizes. Particle size classes used in the present invention have a d value of at least 0.25, preferably 1, more preferably 1.5 and most preferably at least 2 and D at most 18, preferably at most 12, 9 or even 5 with 2/4 being the most preferred.

As the polyurethane forming reaction is moisture sensitive, the aggregates used are preferably pre-dried and/or a water scavenger is added as additive.

The hard aggregate particles are mixed with polyurethane polymer binder system comprising at least one polyol component and at least one polyisocyanate component. Alternatively the polyurethane binder system is composed of at least one polyol component and at least one polyisocyanate component that have been pre-reacted with the proviso that the reaction product is a isocyanate-terminated prepolymer. Next to the hydroxyl-functionality (-OH) present in the polyol component it is also possible that this component contains primary or secondary amino groups (-NHR with R being hydrogen or alkyl or aralkyl) or thio groups (-SH).

The polyol component P1 can be selected from a variety of hydroxyl functional compounds such as non- polymeric diols such as ethylene glycol, diethylene glycol, propylene glycol, dipropylene glycol, butane diol, glycerol, trimethylolpropane, triethanolamine, pentaerythritol, sorbitol, and combinations thereof. According to the invention, the polypol P1 can be selected from polymeric polyols such as polyester or polyether polyols, polyesteramides polyols, polycarbonate polyols, polyacetal polyols, polyolefin polyols, acrylic polyols and hydroxy functional ketone resins.

Suitable polyester polyols include, but are not limited to, hydroxyl-terminated reaction products of polyhydric alcohols, such as ethylene glycol, propylene glycol, diethylene glycol, 1,4-butanediol, neopentylglycol, 1,6-hexanediol, cyclohexane dimethanol, glycerol, trimethylolpropane, pentaerythritol or polyether polyols or mixtures of such polyhydric alcohols, and polycarboxylic acids, especially dicarboxylic acids or their ester-forming derivatives, for example succinic, glutaric and adipic acids or their dimethyl esters sebacic acid, phthalic anhydride, tetrachlorophthalic anhydride or dimethyl terephthalate or mixtures thereof. Polyester polyols obtained by the polymerization of lactones, e.g. caprolactone, in conjunction with a polyol, or of hydroxyl carboxylic acids, e.g. hydroxy caproic acid, may also be used.

Suitable polyether polyols include products obtained by the polymerization of a cyclic oxide, for example ethylene oxide, propylene oxide, butylene oxide, or tetrahydrofuran in the presence of polyfunctional initiators. Suitable initiator compounds contain a plurality of active hydrogen atoms, and include water, butanediol, ethylene glycol, propylene glycol, diethylene glycol, triethylene glycol, dipropylene glycol, ethanolamine, diethanolamine, triethanolamine, toluene diamine, diethyl toluene diamine, phenyl diamine, diphenylmethane diamine, ethylene diamine, cyclohexane diamine, cyclohexane dimethanol, resorcinol, bisphenol A, glycerol, trimethylolpropane, 1,2,6-hexanetriol, pentaerythritol, and combinations thereof. Other suitable polyether polyols include polyether diols and triols,
Suitable polyesteramides polyols may be obtained by the inclusion of aminoalcohols such as ethanolamine in polyesterification mixtures. Suitable polythioether polyols include products obtained by condensing thiodiglycol either alone, or with other glycols, alkylene oxides, dicarboxylic acids, formaldehyde, aminoalcohols or aminocarboxylic acids.

Suitable polycarbonate polyols include products obtained by reacting diols such as 1,3-propanediol, 1,4-butanediol, 1,6-hexanediol, diethylene glycol or tetraethylene glycol with diaryl carbonates, e.g. diphenyl carbonate, or with phosgene.

Suitable polyacetal polyols include those prepared by reacting glycols such as diethylene glycol, triethylene glycol or hexanediol with formaldehyde. Other suitable poly acetal polyols may also be prepared by polymerizing cyclic acetals.

Suitable polyolefin polyols include hydroxy-terminated butadiene homo- and copolymers and suitable polysiloxane polyols include polydimethylsiloxane diols and triols.

Suitable acrylic polyols include the copolymerization products of hydroxy-functional (meth)acrylate esters and non-functional (methacrylate esters obtained by means of free radical polymerization techniques.

Suitable hydroxy-functional ketone resins include those prepared by the reaction of ketones such as but are not limited to: cyclohexanone, acetophenone, methyl isobutyl ketone, methyl ethyl ketone, trimethylcyclohexanone and isophorone, alone or in mixtures, with aldehydes in the presence of basic catalysts or acids.

Suitable polyol compounds are also the ester-group-free polyols obtained by the reaction of epoxies and hydroxy-functional compound as described in US2006/0111545A1.

Another class of polyols that can be used includes natural polyols including naturally occurring vegetable oils that contain unreacted OH functional groups (e.g., castor oil), chemically modified natural oil polyols (e.g., modified castor oil, soybean oil, rapeseed oil, coconut oil, peanut oil, canola oil, and the like). These polyols are commercially available from companies such as Nuplex Resins under the trade name Setathane® D, from BASF under the tradename Sovermol® and from Alberdingk Boley under the tradename Albodur®. Natural polyols based on vegetable oil may be included in the polyol component to decrease the viscosity of the mixture. In a preferred embodiment of the invention the polyol component contains at least one natural polyol in concentrations from 10 to 90 wt%, more preferably from 50 to 85 wt% and most preferably from 70 to 80%.

Therefore the invention also relates to a two-component biobased polyurethane binder system and the use of said a two-component biobased polyurethane binder system for road surfacing, wherein the biobased polyurethane binder system comprises a polyol P1 and a polyisocyanate P2 wherein polyol P1 contains at least one natural polyol in an amount from 10 to 90 wt%, more preferably from 50 to 85 wt% and most preferably from 70 to 80% (relative to the total amount of polyol P1) said natural polyol being chosen from the list of naturally occurring vegetable oils that contain unreacted OH functional groups, preferably castor oil, or chemically modified natural oil polyols, preferably chemically modified castor oil, soybean oil, rapeseed oil, coconut oil, peanut oil or canola oil, which two-component biobased polyurethane binder system after curing has a crosslink density X, defined as the number of moles of elastically effective network chains per volume, between 0.1 and 2, preferably between 0.1 and 1.7 and more preferably between 0.1 and 1.5 mmoles/cm³. The advantage of this polyurethane binder system is the lower ecologic footprint. Further, natural polyols based on vegetable oil may be included in the polyol component to decrease the initial viscosity of the polyurethane binder system, which is an advantage in view of easier mixing and wetting of the aggregate allowing using lower binder amounts and higher porosity.

The polyol component of the invention can contain minor amounts of organic solvents, but in a preferred embodiment, the component is solvent-free. As a consequence it is the polyol component preferably has a suitably low viscosity at ambient temperature. The viscosity of the polyol component at 23 °C is from 100 to 50,000 mPa.s as measured according to DIN EN ISO 3219/A.3 (1994), more preferably from 10,000 to 200 mPa.s and most preferably from 4,500 to 300 mPa.s. The viscosity of the components in the polyurethane binder is the viscosity before mixing with other components.

In order for the polyol component to be suitable to be used in the road surfacing compositions of the invention, it has to have a water uptake not exceeding 10 % by weight. The water-uptake can be determined experimentally by determining the weight gain of a sample after 7 days of open storage at 23° C. and 97% atmospheric humidity.

The hydroxyl content (%OH) of the polyol component is preferably from 8 to 3.5% according to DIN 53 240/2
The polyisocyanate component P2 used in the polyisocyanate component may include one or more isocyanate functional groups, typically at least two isocyanate functional groups. Suitable isocyanates include, but are not limited to those derived from conventional aliphatic, cycloaliphatic, aryl and aromatic isocyanates. Some more specific examples include diphenylmethane diisocyanates , polymeric diphenylmethane diisocyanates, and combinations thereof. Examples of other suitable isocyanates include, but are not limited to, toluene diisocyanates , hexamethylene diisocyanates, isophorone diisocyanates and combinations thereof. One or more of these isocyanates may be used to form an isocyanate-prepolymer. An isocyanate-prepolymer may be formed by combining an isocyanate with a polyol or with a polyamine. In some embodiments, a combination of two or more of the aforementioned isocyanate-prepolymers may be used as the polyisocyanate component.

The polyisocyanate component in the road surfacing composition of this invention needs to have sufficiently low viscosity in order to allow it to be handled at ambient temperature.

Preferably the polyisocyanate component is solvent-free. The viscosity of the polyisocyanate component is preferably less than 700, 500 or most preferably less than 400 mPas, preferably between 50 and 400 mPa.s at 23 °C. The isocyanate content (%NCO) preferably is between 20 and 40%.

The ratio to obtain a stoichiometric reaction (referred to as "100%") between P1 and P2 can be calculated as follows. For 100 grams of component P1, the weight of component P2 is: 42^{∗}100^{∗}OH% / 17^{∗}NCO%), where OH% is the hydroxyl value of component P1 as determined by DIN 53 240/2 and NCO% is the isocyanate value ASTM D5155-14 "Test methods for polyurethane raw materials: Determination of the isocyanate content of aromatic isocyanates" or ASTM D2572 - 97 "Standard Test Method for Isocyanate Groups in Urethane Materials or Prepolymers". If P1 and P2 are blends of different polyols or polyisocyanates respectively, the values for OH% and NCO% provided by the suppliers can be used to calculate the values for the blends.

Normally a stoichiometric curing results in satisfactory performance of the road surfacing, however when moist or wet aggregate is used or under adverse weather condition (high humidity, low temperature), it may be beneficial to have an excess of polyisocyanate component P2. Therefore, the ratio can be more than 100%, for example 110, 120, 130 or even up to 150%.

It is important for the cured polyurethane binder to be able to dissipate mechanical energy, also at low temperatures (for example under freezing conditions). If the cured binder system would have a cross-link density that is too high, the physical bond between the aggregate particles will be destroyed, which will result in pre-mature acoustic and mechanical failure. Crosslink density is typically given either as the number of moles of elastically effective network chains per volume (X) or as the average molecular weight between crosslinks (M_{c}) and can be determined by means of dynamical mechanical thermal analysis (DMTA). DMTA is a generally known method for determining characteristics of coatings and is described in more detail in T. Murayama, Dynamic Mechanical Analysis of Polymeric Material (Elsevier: New York 1978) and Loren W. Hill, Journal of Coatings Technology, Vol. 64, No. 808, May 1992, pp. 31-33. Therefore the %OH of P1 and the %NCO of P2 and the ratio of P1 and P2 are chosen in such a way that the number of moles of elastically effective network chains per volume of the cured composition consisting of the mixture P1+P2, is from 0.1 to 2, preferably 1.7 and more preferably 1.5 mmol/cm³.

The optimum amount of polyurethane binder system used, within the stated limits, is such that all particles in the composition are evenly covered with the polyurethane binder system.

In that way the polyurethane polymer, once formed, acts as a bridge between the aggregate particles. Free or surplus polyurethane binder system in excess of the amount needed to encapsulate the particulate ingredients of the composition is preferably kept to a minimum. Therefore the weight ratio between A and (P1+P2) is preferably 97.5:2.5 to 90:10.

Other components referred to as additives other than a) or b) can be present preferably in an as little amount as possible, according to the invention up to a maximum amount of 10 wt%, to not negatively influence the porosity and durability. Such additives have a function different from the function of the particles A and binder P providing hardness to the road surfacing and binding the particles.

Next to the aggregate and the polyurethane polymer binder system the composition can contain materials such as fillers (e.g. fine sand), wetting agents, adhesion-promotors (e.g. amino-silanes), catalysts, water-scavengers, light stabilizers and the like. Preferably the total amount of such other components is less than 10, preferably 7, more preferably 5 wt%. Catalysts can be used to accelerate the urethane forming reaction. As catalysts it is possible to use the compounds which are known per se in polyurethane chemistry for accelerating the NCO/OH reaction (cf. "Kunststoff Handbuch 7, Polyurethane", Carl-Hanser-Verlag, Munich-Vienna, 1984, pp. 97-98). Suitable catalysts include include tin (II) or (IV) salts of organic carboxylic acids, e.g. tin acetate, tin octoate, tin ethylhexanoate, tin laurate, dibutyltin dilaurate. Examples of other suitable catalysts include but are limited to amine based catalysts, bismuth-based catalysts, nickel based catalysts, zirconium based catalysts, zinc-based catalysts, aluminum-based catalysts, and lithium based catalysts.

Water scavengers can be used advantageously in case the aggregate has high moisture content. Suitable water-scavengers include dehydrated crystalline metal aluminosilicates often referred to as molecular sieves or mono- or bis oxazolidines.

In order to protect the polyurethane binder from degradation antioxidants such as 2,6-di-tert-butyl-4-methylphenol, UV absorbers of the 2-hydroxyphenylbenzotriazole type or light stabilizers of the type of the HALS compounds which are unsubstituted or substituted on the nitrogen atom, such as Tinuvin® 292 and Tinuvin® 770 DF (BASF) or other commercially customary stabilizers can be used.

Components A, P1 and P2 are stored separately prior to the application of the road surface. Additional component that are liquid or paste-like are preferably pre-mixed with the polyol component. The ingredients of the composition are transported and preferably mixed cold at the laying site. Mixing can be done by any kind of device, such as an in-line mixing device or a batch mixing device. First both polyurethane precursors P1 and P2 should be thoroughly mixed. Then the mixed polyurethane binder system should be added to the aggregates in order to ensure a good coverage of the binder on the aggregate surface. Thorough mixing should continue to ensure homogeneity. The mixed road surfacing composition should be dropped onto a clean, flat storage platform or delivery vehicle. From the delivery vehicle, the material can be loaded into a surfacing machine with the screed bars set to the required depth. In general, laid depths of 10 mm to over 40 mm are easily attainable, with about 30 mm providing a reasonable general purpose covering. It is of course not mandatory that the composition is spread by a surfacing machine: it could alternatively be raked flat by hand. Rolling of the surface with a roller but avoiding waving effects will assist in providing mechanical interlocking of the aggregate, and assist surface bonding, and provide a smooth texture which contributes to noise reduction.

The road surfacing composition is preferably applied onto a substrate that has water draining capabilities and/or is also water permeable in order to reduce standing water on the road surface and prevent damage due to freezing of water in the pores of the road surface. In a specific embodiment of this invention, the substrate is highly porous asphalt according to BS EN 13108-7. Optimal noise reduction results are obtained when the road surfacing composition of the invention is applied at a layer thickness of 10 to 60, preferably 10 to 50, more preferably 10 - 40 mm over a 10 - 80 mm, preferably 20 - 60, more preferably 30 - 60 or 40 - 60 mm thick layer of highly porous asphalt. On an impervious substrate such as concrete or conventional asphalt based road surfaces additional measures need to be taken to ensure good water drainage.

Prior to applying the road surfacing composition of the invention the substrate can be prepared by scarifying, grinding, blasting or similar techniques in order to obtain better adhesion. The surface of the substrate can be planed prior to the laying operations as required. Whilst it is not essential for the substrate to be completely dry, there should not be standing water or water of any measurable quantity. When the conditions allow, the substrate can be briefly heated to dry to top layer of the substrate (by infra-red or similar devices).

The composition of the invention, when laid and cured, provides a very durable road surface which has a high inherent structural strength, bonds well to the surface on which it is laid and has an outstanding stability through extremes of temperatures. It shows no serious adverse performance characteristics either at temperatures so cold that asphalt would tend to become brittle and crack, or at temperatures so hot that asphalt would tend to deform or creep under traffic loads. It is less dense than asphalt and is therefore suitable for covering the road surfaces of bridges and elevated highways.

The cured road surfacing according to the invention has a compressive strength of at least 1.4 MPa, preferably at least 2.0 MPa and most preferably at least 2.6 MPa, a tensile strength of at least 0.8 MPa, preferably at least 2.0 MPa and most preferably at least 1.5 MPa, with an E-modulus (compression) of at least 0.1 GPa.

The following non-limiting examples are given to further illustrate the invention.

### Raw materials used:

### Polyols:

Setathane D1150: a modified castor oil based polyol with a hydroxyl value of 4.7% commercially available from Nuplex Resins GmbH.

Setathane D 1160: a modified castor oil based polyol with a hydroxyl value of 5.4% commercially available from Nuplex Resins GmbH.

Castor oil: hydroxyl-functional vegetable oil with a hydroxyl value of 160 mg KOH/g supplied by Alberdingk Boley.

### Polyisocyanates:

Desmodur VL: an aromatic polyisocyanate based on diphenylmethane diisocyanate with an isocyante content of 31.5% obtainable from Covestro GmbH.

Desmodur VL-50: an aromatic polyisocyanate based on diphenylmethane diisocyanate with an isocyanate content of 32.5% obtainable from Covestro GmbH.

Desmodur VH-20: an aromatic polyisocyanate based on diphenylmethane diisocyanate with an isocyante content of 24.5% obtainable from Covestro GmbH.

### Aggregate:

In all of the patent examples the following aggregates were used that were sourced from Rheinische Provinzial-Basalt- und Lavawerke GmbH & Co:
"Basalt 1" is an aggregate with size class 2/5. Prior to use Basalt 1 was sieved over a 4 micron mesh.
"Basalt 2" is an aggregate with size class 1/2.

"Granodiorite" is a granodiorite aggregate with size class 0.25/2.

All aggregates were pre-dried at 105 °C until constant mass.

### Additives:

Purmol 3ST: a molecular sieve commercially available from Zeochem AG (as water scavenger).

As substrate for the application a two layer highly porous asphalt consisting of the ingredients given in table I is used.

**Table I. Highly porous asphalt composition.**

| **Component** | **Weight (kg)** |
|---|---|
| Wigro 60K* | 4.34 |
| Sand | 5.56 |
| Diabase size class 4/8 | 74.25 |
| Polymer modified bitumen | 4.85 |

| | |
|---|---|
| * Filler available from Sibelco Europe Minerals Plus | |

### Test methods used

### Determination of molecular weight between crosslinks in a cured polyurethane:

The molecular weight between crosslinks, Mc, is determined with DMTA. The DMTA used is a modified Rheovibron (Toyo Baldwin type DDV-II-C) at a frequency of 11 Hz with a dynamic tensile strain of 0.03%. The temperature is varied between -50° C. and 200° C at a heating rate of 5° C/min. All measurements are done in the tensile mode and at each temperature the tensile storage modulus E' , the tensile loss modulus E" , and tan-δ (tan-δ=E" /E') are determined. In the glass transition region E' decreases sharply. At temperatures above the glass transition temperature T_{g} but below the rubber to liquid transition temperature T-flow, E' has a local minimum (E'ₘᵢₙ) at a temperature (Tₘᵢₙ in K), after which it increases with the temperature. The cross-link density parameter X is the ratio between this minimum tensile storage modulus E'ₘᵢₙ and temperature Tₘᵢₙ (X=E'ₘᵢₙ/3RTₘᵢₙ) at which this modulus E'ₘᵢₙ is reached. Assuming a density, p, for the cured polyurethane binder of 1,100 kg/m³, X can easily be converted in M_{c} as M_{c}=ρ/X.

**Preparation of testing specimen ("prisms"):** a blend was made from the polyol A and the polyisocyanate B in a suitable recipient. This blend was mixed until the mixture was homogenous. The polyurethane polymer precursor blend was then transferred to the bowl of a Hobert® planetary mixer. The mixer is started and the pre-dried aggregate was added. Mixing is continued for at least two minutes until a uniform distribution of the polyurethane precursor on the aggregate surface is achieved. The edges of the bowl are scraped and mixing is continued for another two minutes. The mixture is placed in a steel mold (the demolding agent used is silicone spray). The mixture is spread by trowel and compacted by hammering. The surface is then smoothened with a trowel. The mold is placed into a stove set at 40 °C for 7 days to ensure full cure and to ascertain that the final properties are obtained. The molds are taken out of the stove and demolded in order to obtain the test specimen.

**Tensile strength:** this three point bending test is performed on 40 x 40 x 160 mm prisms using an Instron M5969 50KN. The test is motion controlled at a speed of 2 mm/min. The span is 100 mm. The tensile bending strength is defined as the maximum tensile stress in the load displacement graph. E-modulus in tensile bending is calculated between 5% and 33% of tensile strength.

**Compressive strength (according to EN 196-2):** the compression test is performed on one part of the prism used for the tensile bending test using an Instron M5969 50KN compression-testing machine. The test is motion controlled at a speed of 1 mm/min. The compressive strength is defined as the maximum stress in the load displacement graph. E-modulus in compression is calculated between 5% and 33% of strength.

### Determination of P1 and P2 types and ratios.

Before formulating complete road surfacing compositions, suitable combinations of P1 and P2 where determined. The ingredients given in table II were mixed together at ambient temperature until homogeneous mixtures were obtained (examples a-g).

**Table II.**

| | | Example | | | | | | |
|---|---|---|---|---|---|---|---|---|
| Component | Raw material | a | b | c | d | e | f | g |
| P1 | Setathane D 1150 | 35.94 | 36.25 | 33.15 | 17.62 | 17.78 | 16.18 | |
| | Setathane D 1160 | | | | 17.62 | 17.78 | 16.18 | |
| | Castor oil | | | | | | | 21.9 |
| P2 | Desmodur VL | 14.06 | | | 14.76 | | | 4.6 |
| | Desmodur VL-50 | | 13.75 | | | 14.45 | | |
| | Desmodur VH 20 | | | 16.85 | | | 17.64 | |

Films from example a-f were applied on a polypropylene substrate at a layer thickness of 30-40 micron and they were allowed to cure for 7 days at ambient temperature. After curing the films were peeled of the substrate and were investigated by means of DMTA as described above. The values obtained are given in table III.

**Table III.**

| Example | E'ₘᵢₙ | Tₘᵢₙ | X | M_{c} |
|---|---|---|---|---|
| | MPa | °C | mmole/cm³ | g/mole |
| a | 4.50 | 99.3 | 0.485 | 2270 |
| b | 2.24 | 109.7 | 0.235 | 4690 |
| c | 1.97 | 144.6 | 0.189 | 5810 |
| d | 4.67 | 94.4 | 0.509 | 2160 |
| e | 2.39 | 84.2 | 0.268 | 4100 |
| f | 2.11 | 144.5 | 0.203 | 5430 |
| g | 11.9 | 65 | 1.411 | 780 |

As it can be seen from the obtained values for Mc, all compositions are suitable for the preparation of road surfacing compositions of the present invention.

### Example 1

A composition according to the invention had the following content by weight:

**Table IV.**

| **Component** | **Weight (grams)** |
|---|---|
| Basalt 1 | 1665.0 |
| Setathane D 1150 | 135.2 |
| Desmodur VH-20 | 59.5 |

Part of the composition was used to prepare a prism for testing the final mechanical properties. The results are given in table V.

**Table V.**

| **Property** | **ex. 1** |
|---|---|
| Tensile Strength (MPa) | 5.33 |
| E-modulus (GPa) tensile | 0.345 |
| Compressive Strength (MPa) | 8.37 |
| E-modulus (GPa) compression | 0.780 |

Another part of the composition is distributed by hand on a milled high porosity asphalt slab with a thickness of 50 mm and is compacted manually. In addition the surface was smoothened by rolling. The layer thickness of the composition according to the invention was 30 mm. After curing for 24 hours at 20°C the product has a compressive strength of 3.4 MPa and therefore is strong enough to take on traffic. Full curing will be achieved in one week after which the compressive strength has increased to a value of 4.1 MPa. The porosity of the test piece was checked by pouring water on top of the piece. All water quickly permeated though the piece and was drained via the bottom of the layer of highly porous asphalt, leaving hardly any residual water in the test piece.

### Examples 2 and 3

Test pieces were prepared using the composition from table VI.

**Table VI.**

| **Component** | **ex. 2** | **ex. 3** |
|---|---|---|
| Granodioriet | 87.5 | |
| Basalt 2 (1/2) | | 87.5 |
| Setathane D 1150 | 9.125 | 9.125 |
| Desmodur VL | 3.375 | 3.375 |

The mechanical properties are given in table VII.

**Table VII**

| **Property** | **ex. 2** | **ex. 3** |
|---|---|---|
| Tensile Strength (MPa) | 4.10 | 5.94 |
| E-modulus (GPa) tensile | 0.077 | 0.069 |
| Compressive Strength (MPa) | 5.76 | 7.08 |
| E-modulus (GPa) compression | 0.310 | 0.282 |

The porosities of the cured road surfacing composition were measured according to EN 12697-6 as described above and compared with highly porous asphalt described above. Clearly the porosity of the road surfacing of the invention is much higher. The results are summarized in Table VIII

**Table VIII**

| | mass under water [gr] | Dry mass [gr] | Volume [mm³] | Dim BD* [kg/m³] | Dry BD ** [kg/m³] | Porosity [%] |
|---|---|---|---|---|---|---|
| Example 1 Basalt 1 (2/4) | 279.8 | 451.7 | 272921 | 1654.9 | 2628.2 | 37 |
| Example 2 Basalt 2 (1/2) | 257.8 | 452.8 | 265824 | 1703.4 | 2322.1 | 27 |
| porous asphalt | 358.3 | 623.2 | 339990 | 1833.1 | 2352.4 | 20 - 22 |

| | | | | | | |
|---|---|---|---|---|---|---|
| * Dimensional bulk density, ** dry bulk density | | | | | | |

### Examples 3 - 9.

Test pieces were prepared using the composition from table IX.

| **Component** | **ex. 4** | **ex. 5** | **ex. 6** | **ex. 7** | **ex. 8** | **Ex. 9** |
|---|---|---|---|---|---|---|
| Basalt 2 | 90.00 | 90.00 | 90.00 | 90.00 | 90.00 | 90.00 |
| Setathane D 1150 | 7.31 | 6.78 | | | 3.58 | 3.31 |
| Setathane D 1160 | | | 7.02 | 6.47 | 3.58 | 3.31 |
| Desmodur VL | 2.69 | | 2.98 | | | |
| Desmodur VH-20 | | 3.22 | | 3.53 | | 3.37 |

The mechanical properties are given in table X.

**Table X.**

| **Property** | **ex. 4** | **ex. 5** | **ex. 6** | **ex. 7** | **ex. 8** | **ex. 9** |
|---|---|---|---|---|---|---|
| Tensile Strength (MPa) | 1.80 | 4.75 | 0.95 | 1.72 | 1.39 | 2.72 |
| E-modulus (GPa) tensile | 0.04 | 0.12 | 0.03 | 0.03 | 0.03 | 0.04 |
| Compressive Strength (MPa) | 3.84 | 7.24 | 1.97 | 3.21 | 2.92 | 5.10 |
| E-modulus (GPa) compression | 0.272 | 0.456 | 0.167 | 0.187 | 0.213 | 0.288 |

### Comparative example 10 and example 11 (according to the invention).

In example 10 the polyurethane binder system was replaced by a polymer modified bitumen (PMB). The polymer modification is done by the addition of 5.5 wt% Kraton® FG 1901 X. Kraton® FG 1901 X is a SEBS (styrene-ethylene-butene-styrene) linear block copolymer with a styrene content equal to 30% by weight with respect to the total, functionalized by the grafting of maleic anhydride for a quantity equivalent to 2% by weight. The PMB has to be heated to 150 °C to liquefy the material prior to the addition of the aggregate. Compositions are given in table XI.

**Table XI.**

| **Component** | **comparative example 10** | **example 11 (according to the invention)** |
|---|---|---|
| Polymer modified bitumen | 7.5 | |
| Setathane D 1150 | | 5.5 |
| Desmodur VL | | 2.0 |
| Granodiorite (size class 0.25/2) | 92.5 | 92.5 |

Test prisms were prepared from both compositions and the mechanical properties were determined after curing at 23 °C for 7 days. The results are given in table XII.

**Table XII.**

| **Property** | **Comp. ex. 10** | **ex. 11** |
|---|---|---|
| Tensile Strength (MPa) | 0.39 | 1.93 |
| E-modulus (GPa) tensile | 0.025 | 0.154 |
| Compressive Strength (MPa) | 1.34 | 5.08 |
| E-modulus (GPa) compression | 0.047 | 0.406 |

From these results it becomes clear that substitution of the bituminous binder with a polyurethane binder has a dramatic effect on the properties of the road surfacing composition.

### Example 12.

Compositions according to table XIII were prepared. Hover rather than taking Basalt 1 that had been dried until constant weight at 105 °C, basalt containing 1 wt% of moisture was used.

**Table XIII.**

| **Component** | **wt%** | | | |
|---|---|---|---|---|
| | **ex. 12** | **ex. 13** | **ex. 14** | **ex. 15** |
| Basalt with 1 wt% of moisture | 94.50 | 94.24 | 93.98 | 92.72 |
| Setathane D 1150 | 3.74 | 3.73 | 3.72 | 3.67 |
| Desmodur VH-20 | 1.76 | 1.76 | 1.75 | 1.73 |
| Purmol 3ST | - | 0.27 | 0.55 | 1.89 |

Prisms were prepared in triplo for each experiment as described before, but the test specimen were demolded after one, three and seven days in order to study the evolution of compressive strength as a function of time. The results are shown in table XIV.

**Table XIV.**

| **Compressive strength (Mpa) @ 40 °C after** | **ex. 12** | **ex. 13** | **ex. 14** | **ex. 15** |
|---|---|---|---|---|
| 1 day | 1.4 | 1.6 | 1.8 | 7.6 |
| 3 days | 1.6 | 1.8 | 2.0 | 7.7 |
| 7 days | 1.5 | 1.7 | 2.2 | 8.4 |

## Claims

1. A road surfacing composition for the preparation of a silent and water-permeable road surfacing comprising:
a) 80 - 98 wt% of hard particles A,
b) 2 - 20 wt% of a two-component polyurethane binder system comprising a polyol P1 selected from polymeric polyols such as polyester or polyether polyols, polyesteramides polyols, polycarbonate polyols, polyacetal polyols, polyolefin polyols, acrylic polyols and hydroxy functional ketone resins, or selected from natural polyols including naturally occurring vegetable oils that contain unreacted OH functional groups, or a chemically modified natural oil polyols, a polyisocyanate P2 and optionally polyurethane precursors, which after curing has a crosslink density X, defined as the number of moles of elastically effective network chains per volume, between 0.1 and 2, preferably between 0.1 and 1.7 and more preferably between 0.1 and 1.5 mmoles/cm³,
c) 0 - 10 wt% additives other than a) or b),
the sum of wt% of a) to c) being 100 wt%.
said road surfacing composition having a porosity of at least 10, preferably at least 15, more preferably at least 20 % defined as open volume relative to the total volume of the composition.

2. The road pavement composition of claim 1, wherein the volume of polyurethane binder system P is less than 80, 70, 60 or even 50 % of the total bulk free volume of the hard particles A, determined as the volume percentage of an amount of water that can be added to a volume of hard particles.

3. The road surfacing composition of any of claims 1 - 2 comprising:
a) 85 - 97.5 wt%, more preferably 90 - 97.5 and most preferably 92 - 97 wt%,of hard particles A,
b) 2.5 - 15 wt%, more preferably 2.5 - 10 and most preferably 3 - 8 wt%,of the two-component polyurethane binder system comprising a polyol P1, a polyisocyanate P2 and optionally polyurethane precursors.

4. The road surfacing composition of any of claims 1 - 3 wherein the hard particles are selected from sand, gravel, crushed stone or rock, slag, recycled concrete or geosynthetic aggregates or combinations thereof, preferably crushed igneous or metamorphic rock, wherein more preferably the hard particles are selected from crushed granite, diorite, gabbro, peridotite, diabase, rhyolite, andesite or basalt or combinations thereof, preferably basalt.

5. The road surfacing composition of any of claims 1 - 4 wherein the hard particles have an average particle size between 0.5 and 8 mm, preferably between 1 and 6, more preferably between 2 and 4 mm, wherein preferably at least 80, preferably at least 90 wt% of the particles have a size between 1 and 6, more preferably between 2 and 4 mm, and wherein the aggregate preferably is crushed rock sieved with a lower limiting sieve size d and an upper limiting sieve size D, wherein d is at least 0.25, preferably 1, more preferably 1.5 and most preferably at least 2 and D is at most 18, preferably at most 12, 9 or even 5, most preferably d/D being 2/4.

6. The road surfacing composition of any of claims 1 - 5 wherein the polyurethane binder system is substantially free of organic solvents and substantially free of water.

7. The road surfacing composition of any of claims 1 - 6 wherein the initial viscosity of the polyurethane binder system at 23 °C, as measured according to DIN EN ISO 3219/A3, is from 100 to 50,000, preferably from 200 to 10,000 mPa.s and most preferably from 300 to 4,500 mPa.s, and wherein the viscosity of the polyol P1 of the polyurethane binder system at 23 °C preferably is from 100 to 50,000 mPa.s, more preferably from 200 to 10,000 mPa.s and most preferably from 300 to 4,500 mPa.s, according to DIN EN ISO 3219/A3, and the viscosity at 23 °C of the polyisocyanate P2 of the polyurethane binder system preferably is less than 1000, preferably less than 700, 500 or 400 mPa.s, most preferably between 50 and 400 mPa.s, according to DIN EN ISO 3219/A3.

8. The road surfacing composition of any of claims 1 - 7 wherein the polyol P1 has a hydroxyl content (%OH) from 6 to 3.5%, preferably 8 to 3.5%,, according to DIN 53 240/2, and the polyisocyanate P2 has a isocyanate content (%NCO) between 20 and 40%.

9. The road surfacing composition of any of claims 1 - 8 wherein the polyol P1 comprises natural polyols including naturally occurring vegetable oils that contain unreacted OH functional groups, preferably castor oil, chemically modified natural oil polyols, preferably modified castor oil, soybean oil, rapeseed oil, coconut oil, peanut oil, canola oil.

10. The road surfacing composition of claims 1 - 9 wherein the polyol P1 contains at least one natural polyol in an amount from 10 to 90 wt%, more preferably from 50 to 85 wt% and most preferably from 70 to 80% and wherein the polyol P1 preferably has a water uptake not exceeding 10% by weight as determined by determining the weight gain of a sample after 7 days of open storage at 23 °C and 97% atmospheric humidity.

11. A method for the preparation of the road surfacing composition of claims 1 - 10 comprising
a) Providing hard particles A as in any of claims 1-10,
b) Providing a two-component polyurethane binder system P comprising a polyol P1 and a polyisocyanate P2 and optionally polyurethane precursors as in any of claims 1-10,
c) adding the polymer binder system to the hard particles and mixing to wet the hard particles,
d) adding 0 - 10 wt% other additives as in any of claims 1-10.

12. A method for the preparation of a road surfacing comprising depositing the road surfacing composition of claims 1 - 10 on a road substrate, evenly spreading out a layer of the road surfacing composition over the road substrate surface to be covered and allowing the polyurethane binder system to cure, wherein the road substrate preferably is a water permeable porous substrate, preferably asphalt.

13. A road surfacing comprising a cured layer of a road surfacing composition according to claims 1 - 10 which is porous and water permeable and preferably between 10 and 60 mm thick, the road surfacing preferably having a compressive strength of at least 1.4 MPa, preferably at least 2.0 MPa and most preferably at least 2.6 MPa, a tensile strength of at least 0.8 MPa, preferably at least 2.0 MPa and most preferably at least 1.5 MPa and an E-modulus in compression of at least 0.1 GPa.

14. A road surfacing comprising multiple layers, with a layer of road surfacing according to claim 13 placed on a road substrate layer, preferably asphalt, wherein both the road substrate and the road surfacing layers are water permeable and porous, wherein preferably the road surfacing layer has a layer thickness of 10 to 60, preferably 10 to 50, more preferably 10 - 40 mm and the porous road substrate, preferably porous asphalt, is between 10 - 80 mm, preferably 20 - 60, more preferably 30 - 60 or 40 - 60 mm thick.

15. Use of a two-component biobased polyurethane binder system for road surfacing compositions according to any of claims 1-10, wherein the biobased polyurethane binder system comprises a polyol P1 and a polyisocyanate P2 wherein polyol P1 contains at least one natural polyol in an amount from 10 to 90 wt%, more preferably from 50 to 85 wt% and most preferably from 70 to 80% relative to the total amount of polyol P1, said natural polyol being chosen from the list of naturally occurring vegetable oils that contain unreacted OH functional groups, preferably castor oil, or chemically modified natural oil polyols, preferably chemically modified castor oil, soybean oil, rapeseed oil, coconut oil, peanut oil or canola oil, which two-component biobased polyurethane binder system after curing has a crosslink density X, defined as the number of moles of elastically effective network chains per volume, between 0.1 and 2, preferably between 0.1 and 1.7 and more preferably between 0.1 and 1.5 mmoles/cm³

## Patentansprüche

1. Straßenbelagszusammensetzung zur Herstellung eines geräuscharmen und wasserdurchlässigen Straßenbelags, umfassend:
a) 80 - 98 Gew.-% harte Partikel A,
b) 2 - 20 Gew.-% eines Zweikomponenten-Polyurethan-Bindemittelsystems, umfassend ein Polyol P1, ausgewählt aus polymeren Polyolen wie Polyester- oder Polyetherpolyolen, Polyesteramidpolyolen, Polycarbonatpolyolen, Polyacetalpolyolen, Polyolefinpolyolen, Acrylpolyolen und hydroxyfunktionellen Ketonharzen, oder ausgewählt aus natürlichen Polyolen, umfassend natürlich vorkommende Pflanzenöle, die nicht umgesetzte OH-funktionelle Gruppen enthalten, oder chemisch modifizierte Naturöl-Polyole, ein Polyisocyanat P2 und gegebenenfalls Polyurethan-Präkursoren, das nach dem Härten eine Vernetzungsdichte X, definiert als die Molzahl an elastisch wirksamen Netzwerkketten pro Volumen, zwischen 0,1 und 2, vorzugsweise zwischen 0,1 und 1,7 und stärker bevorzugt zwischen 0,1 und 1,5 mmol/cm³ hat,
c) 0 - 10 Gew.-% anderer Additive als a) oder b),
wobei die Summe in Gew.-% von a) bis c) 100 Gew.-% beträgt,
wobei die Straßenbelagszusammensetzung eine Porosität von mindestens 10, vorzugsweise mindestens 15, stärker bevorzugt mindestens 20 %, definiert als offenes Volumen bezogen auf das Gesamtvolumen der Zusammensetzung, hat.

2. Straßenpflasterzusammensetzung nach Anspruch 1, wobei das Volumen des Polyurethan-Bindemittelsystems P weniger als 80, 70, 60 oder sogar 50 % des freien Volumens der Gesamtmasse der harten Partikel A, bestimmt als der Volumenprozentsatz einer Menge an Wasser, die einem Volumen an harten Partikeln zugegeben werden kann, beträgt.

3. Straßenbelagszusammensetzung nach einem der Ansprüche 1 - 2, umfassend:
a) 85 - 97,5 Gew.-%, stärker bevorzugt 90 - 97,5 und am stärksten bevorzugt 92 - 97 Gew.-% harte Partikel A,
b) 2,5 - 15 Gew.-%, stärker bevorzugt 2,5 - 10 und am stärksten bevorzugt 3 - 8 Gew.-% des Zweikomponenten-Polyurethan-Bindemittelsystems, umfassend ein Polyol P1, ein Polyisocyanat P2 und gegebenenfalls Polyurethan-Präkursoren.

4. Straßenbelagszusammensetzung nach einem der Ansprüche 1 - 3, wobei die harten Partikel ausgewählt sind aus Sand, Kies, Schotter oder Gesteinsmehl, Schlacke, Recyclingbeton oder geosynthetischen Aggregaten oder Kombinationen davon, vorzugsweise Magma- oder metamorphem Gesteinsmehl, wobei die harten Partikel stärker bevorzugt ausgewählt sind aus zerstoßenem Granit, Diorit, Gabbro, Peridotit, Diabas, Rhyolith, Andesit oder Basalt oder Kombinationen davon, vorzugsweise Basalt.

5. Straßenbelagszusammensetzung nach einem der Ansprüche 1 - 4, wobei die harten Partikel eine durchschnittliche Teilchengröße zwischen 0,5 und 8 mm, vorzugsweise zwischen 1 und 6, stärker bevorzugt zwischen 2 und 4 mm haben, wobei vorzugsweise mindestens 80, vorzugsweise mindestens 90 Gew.-% der Partikel eine Größe zwischen 1 und 6, stärker bevorzugt zwischen 2 und 4 mm haben, und wobei das Aggregat vorzugsweise Gesteinsmehl ist, das mit einer Siebgrößen-Untergrenze d und einer Siebgrößen-Obergrenze D gesiebt wurde, wobei d mindestens 0,25, vorzugsweise 1, stärker bevorzugt 1,5 und am stärksten bevorzugt mindestens 2 ist und D höchstens 18, vorzugsweise höchstens 12, 9 oder sogar 5 ist, wobei d/D am stärksten bevorzugt 2/4 ist.

6. Straßenbelagszusammensetzung nach einem der Ansprüche 1 - 5, wobei das Polyurethan-Bindemittelsystem im Wesentlichen frei von organischen Lösungsmitteln und im Wesentlichen frei von Wasser ist.

7. Straßenbelagszusammensetzung nach einem der Ansprüche 1 - 6, wobei die anfängliche Viskosität des Polyurethan-Bindemittelsystems bei 23 °C, gemessen nach DIN EN ISO 3219/A3, 100 bis 50.000, vorzugsweise 200 bis 10.000 mPa.s und am stärksten bevorzugt 300 bis 4.500 mPa.s beträgt, und wobei die Viskosität des Polyols P1 des Polyurethan-Bindemittelsystems bei 23 °C gemäß DIN EN ISO 3219/A3 vorzugsweise 100 bis 50.000 mPa.s, stärker bevorzugt 200 bis 10.000 mPa.s und am stärksten bevorzugt 300 bis 4.500 mPa.s beträgt, und die Viskosität des Polyisocyanats P2 des Polyurethan-Bindemittelsystems bei 23 °C gemäß DIN EN ISO 3219/A3 vorzugsweise weniger als 1.000, vorzugsweise weniger als 700, 500 oder 400 mPa.s, am stärksten bevorzugt zwischen 50 und 400 mPa.s beträgt.

8. Straßenbelagszusammensetzung nach einem der Ansprüche 1 - 7, wobei das Polyol P1 gemäß DIN 53 240/2 einen Hydroxylgehalt (%OH) von 6 bis 3,5 %, vorzugsweise 8 bis 3,5 % hat, und das Polyisocyanat P2 einen Isocyanatgehalt (%NCO) zwischen 20 und 40 % hat.

9. Straßenbelagszusammensetzung nach einem der Ansprüche 1 - 8, wobei das Polyol P1 natürliche Polyole umfasst, die natürlich vorkommende Pflanzenöle, enthaltend nicht umgesetzte OH-funktionelle Gruppen, vorzugsweise Rizinusöl, chemisch modifizierte Naturöl-Polyole, vorzugsweise modifiziertes Rizinusöl, Sojaöl, Rapsöl, Kokosöl, Erdnussöl, Canolaöl umfassen.

10. Straßenbelagszusammensetzung nach den Ansprüchen 1 - 9, wobei das Polyol P1 mindestens ein natürliches Polyol in einer Menge von 10 bis 90 Gew.-%, stärker bevorzugt 50 bis 85 Gew.-% und am stärksten bevorzugt 70 bis 80 Gew.-% enthält, und wobei das Polyol P1 vorzugsweise über eine Wasseraufnahme verfügt, die 10 Gew.-% nicht übersteigt, bestimmt durch Ermitteln der Gewichtszunahme einer Probe nach 7 Tagen offener Lagerung bei 23 °C und 97 % Luftfeuchte.

11. Verfahren zur Herstellung der Straßenbelagszusammensetzung nach den Ansprüchen 1 - 10, umfassend
a) Bereitstellen harter Partikel A nach einem der Ansprüche 1 - 10;
b) Bereitstellen eines Zweikomponenten-Polyurethan-Bindemittelsystems P, umfassend ein Polyol P1 und ein Polyisocyanat P2 und gegebenenfalls Polyurethan-Präkursoren, nach einem der Ansprüche 1 - 10,
c) Zugeben des Polymer-Bindemittelsystems zu den harten Partikeln und Mischen zum Benetzen der harten Partikel,
d) Zugeben von 0 - 10 Gew.-% anderer Additive nach einem der Ansprüche 1 - 10.

12. Verfahren zur Herstellung eines Straßenbelags, umfassend das Aufbringen der Straßenbelagszusammensetzung nach den Ansprüchen 1 - 10 auf ein Straßensubstrat, gleichmäßiges Verteilen einer Schicht der Straßenbelagszusammensetzung über die zu bedeckende Straßensubstratoberfläche und Ermöglichen, dass das Polyurethan-Bindemittelsystem härten kann, wobei das Straßensubstrat vorzugsweise ein wasserdurchlässiges, poröses Substrat, vorzugsweise Asphalt ist.

13. Straßenbelag, umfassend eine gehärtete Schicht aus einer Straßenbelagszusammensetzung nach den Ansprüchen 1 - 10, die porös und wasserdurchlässig und vorzugsweise zwischen 10 und 60 mm dick ist, wobei der Straßenbelag vorzugsweise eine Druckfestigkeit von mindestens 1,4 MPa, vorzugsweise mindestens 2,0 MPa und am stärksten bevorzugt mindestens 2,6 MPa, eine Zugfestigkeit von mindestens 0,8 MPa, vorzugsweise mindestens 2,0 MPa und am stärksten bevorzugt mindestens 1,5 MPa und einen E-Modul Druck von mindestens 0,1 GPa hat.

14. Straßenbelag, umfassend mehrere Schichten, wobei eine Schicht aus Straßenbelag nach Anspruch 13 auf einer Straßensubstratschicht, vorzugsweise Asphalt, platziert ist, wobei sowohl die Straßensubstrat- als auch die Straßenbelagsschichten wasserdurchlässig und porös sind, wobei vorzugsweise die Straßenbelagsschicht eine Schichtdicke von 10 bis 60, vorzugsweise 10 bis 50, stärker bevorzugt 10 - 40 mm hat und das poröse Straßensubstrat, vorzugsweise poröser Asphalt, zwischen 10 und 80 mm, vorzugsweise 20 und 60, stärker bevorzugt 30 und 60 oder 40 und 60 mm dick ist.

15. Verwendung eines Zweikomponenten-Polyurethan-Bindemittelsystems auf biologischer Basis für Straßenbelagszusammensetzungen nach einem der Ansprüche 1 - 10, wobei das Polyurethan-Bindemittelsystem auf biologischer Basis ein Polyol P1 und ein Polyisocyanat P2 umfasst, wobei das Polyol P1 mindestens ein natürliches Polyol in einer Menge von 10 bis 90 Gew.-%, stärker bevorzugt 50 bis 85 Gew.-% und am stärksten bevorzugt 70 bis 80 Gew.-%, bezogen auf die Gesamtmenge an Polyol P1 enthält, wobei das natürliche Polyol ausgewählt ist aus der Liste natürlich vorkommender Pflanzenöle, die nicht umgesetzte OH-funktionelle Gruppen enthalten, vorzugsweise Rizinusöl, oder chemisch modifizierten Naturöl-Polyolen, vorzugsweise chemisch modifiziertem Rizinusöl, Sojaöl, Rapsöl, Kokosöl, Erdnussöl oder Canolaöl, wobei das Zweikomponenten-Polyurethan-Bindemittelsystem auf biologischer Basis nach dem Härten eine Vernetzungsdichte X, definiert als die Molzahl an elastisch wirksamen Netzwerkketten pro Volumen, zwischen 0,1 und 2, vorzugsweise zwischen 0,1 und 1,7 und stärker bevorzugt zwischen 0,1 und 1,5 mmol/cm³ hat.

## Revendications

1. Composition de revêtement routier destinée à la préparation d'un revêtement routier silencieux et perméable à l'eau, comprenant :
a) 80 à 98 % en poids de particules dures A,
b) 2 à 20 % en poids d'un système de liant polyuréthane à deux constituants comprenant un polyol P1 sélectionné parmi des polyols polymères tels que des polyols polyesters ou polyéthers, des polyols polyesteramides, des polyols polycarbonates, des polyols polyacétals, des polyols polyoléfines, des polyols acryliques et des résines cétoniques à fonctionnalité hydroxy, ou sélectionné parmi des polyols naturels comprenant des huiles végétales naturelles qui contiennent des groupes fonctionnels OH n'ayant pas réagi, ou des polyols qui sont des huiles naturelles modifiées chimiquement, un polyisocyanate P2, et optionnellement des précurseurs de polyuréthane, qui, après le durcissement, a une densité de réticulation X, définie comme le nombre de moles de chaînes de réseau élastiquement actives par volume, de 0,1 à 2 mmoles/cm³, préférablement de 0,1 à 1,7 mmoles/cm³, et plus préférablement de 0,1 à 1,5 mmoles/cm³,
**c)** 0 à 10 % en poids d'additifs autres que a) ou b), la somme des pourcentages pondéraux de a) à c) étant de 100 % en poids,
ladite composition de revêtement routier ayant une porosité d'au moins 10 %, préférablement d'au moins 15 %, plus préférablement d'au moins 20 %, définie comme le volume ouvert relativement au volume total de la composition.

2. Composition de revêtement routier selon la revendication 1, dans laquelle le volume du système de liant polyuréthane P est inférieur à 80, 70, 60, voire 50 % du volume libre total inoccupé par les particules dures A, déterminé en tant que pourcentage volumique d'une quantité d'eau qui peut être ajoutée à un volume de particules dures.

3. Composition de revêtement routier selon l'une quelconque des revendications 1 à 2, comprenant :
a) 85 à 97,5 % en poids, plus préférablement 90 à 97,5 % en poids, et idéalement 92 à 97 % en poids, de particules dures A,
b) 2,5 à 15 % en poids, plus préférablement 2,5 à 10 % en poids, et idéalement 3 à 8 % en poids, du système de liant polyuréthane à deux constituants comprenant un polyol P1, un polyisocyanate P2, et optionnellement des précurseurs de polyuréthane.

4. Composition de revêtement routier selon l'une quelconque des revendications 1 à 3, dans laquelle les particules dures sont sélectionnées parmi du sable, du gravier, des pierres ou des roches concassées, du laitier, du béton recyclé ou des agrégats géosynthétiques ou des combinaisons de ceux-ci, préférablement des roche ignées ou métamorphiques concassées, dans laquelle plus préférablement les particules dures sont sélectionnées parmi du granit, de la diorite, du gabbro, de la péridotite, de la diabase, de la rhyolite, de l'andésite ou du basalte concassés ou des combinaisons de ceux-ci, préférablement du basalte.

5. Composition de revêtement routier selon l'une quelconque des revendications 1 à 4, dans laquelle les particules dures ont une taille de particule moyenne de 0,5 à 8 mm, préférablement de 1 à 6 mm, plus préférablement de 2 à 4 mm, dans laquelle préférablement au moins 80 % en poids, préférablement au moins 90 % en poids des particules ont une taille de 1 à 6 mm, plus préférablement de 2 à 4 mm, et dans laquelle l'agrégat se compose préférablement de roches concassées ayant une taille limite inférieure de tamisage d et une taille limite supérieure de tamisage D, d valant au moins 0,25, préférablement 1, plus préférablement 1,5, et idéalement au moins 2, et D valant au maximum 18, préférablement au maximum 12, 9, voire 5, le rapport d/D étant idéalement de 2/4.

6. Composition de revêtement routier selon l'une quelconque des revendications 1 à 5, dans laquelle le système de liant polyuréthane est sensiblement exempt de solvants organiques et sensiblement exempt d'eau.

7. Composition de revêtement routier selon l'une quelconque des revendications 1 à 6, dans laquelle la viscosité initiale du système de liant polyuréthane à 23 °C, telle que mesurée selon DIN EN ISO 3219/A3, est de 100 à 50 000 mPa.s, préférablement de 200 à 10 000 mPa.s, et idéalement de 300 à 4 500 mPa.s, et dans laquelle la viscosité du polyol P1 du système de liant polyuréthane à 23 °C est préférablement de 100 à 50 000 mPa.s, plus préférablement de 200 à 10 000 mPa.s, et idéalement de 300 à 4 500 mPa.s, selon DIN EN ISO 3219/A3, et la viscosité à 23 °C du polyisocyanate P2 du système de liant polyuréthane est préférablement inférieure à 1 000 mPa.s, préférablement inférieure à 700, 500 ou 400 mPa.s, idéalement de 50 à 400 mPa.s, selon DIN EN ISO 3219/A3.

8. Composition de revêtement routier selon l'une quelconque des revendications 1 à 7, dans laquelle le polyol P1 a une teneur en groupes hydroxyle (% OH) de 6 à 3,5 %, préférablement de 8 à 3,5 %, selon DIN 53 240/2, et le polyisocyanate P2 a une teneur en groupes isocyanate (% NCO) de 20 à 40 %.

9. Composition de revêtement routier selon l'une quelconque des revendications 1 à 8, dans laquelle le polyol P1 comprend des polyols naturels comprenant des huiles végétales naturelles qui contiennent des groupes fonctionnels OH n'ayant pas réagi, préférablement de l'huile de ricin, des polyols qui sont des huiles naturelles modifiées chimiquement, préférablement de l'huile de ricin, de l'huile de soja, de l'huile de colza, de l'huile de noix de coco, de l'huile d'arachide ou de l'huile de canola modifiées.

10. Composition de revêtement routier selon les revendications 1 à 9, dans laquelle le polyol P1 contient au moins un polyol naturel dans une quantité de 10 à 90 % en poids, plus préférablement de 50 à 85 % en poids, et idéalement de 70 à 80 % en poids, et dans laquelle le polyol P1 a préférablement une absorption d'eau ne dépassant pas 10 % en poids, déterminée en déterminant le gain de poids d'un échantillon après 7 jours de stockage ouvert à 23 °C et à un taux d'humidité atmosphérique de 97 %.

11. Procédé de préparation de la composition de revêtement routier selon les revendications 1 à 10, comprenant :
a) la fourniture de particules dures A selon l'une quelconque des revendications 1 à 10,
b) la fourniture d'un système de liant polyuréthane à deux constituants P comprenant un polyol P1 et un polyisocyanate P2, et optionnellement des précurseurs de polyuréthane selon l'une quelconque des revendications 1 à 10,
c) l'addition du système de liant polymère aux particules dures, en mélangeant pour mouiller les particules dures,
d) l'addition de 0 à 10 % en poids d'autres additifs selon l'une quelconque des revendications 1 à 10.

12. Procédé de préparation d'un revêtement routier, comprenant le dépôt de la composition de revêtement routier selon les revendications 1 à 10 sur un substrat routier, l'étalement uniforme d'une couche de la composition de revêtement routier sur la surface du substrat routier à recouvrir, et le fait de laisser le système de liant polyuréthane durcir, le substrat routier étant préférablement un substrat poreux perméable à l'eau, préférablement de l'asphalte.

13. Revêtement routier comprenant une couche durcie d'une composition de revêtement routier selon les revendications 1 à 10, laquelle est poreuse et perméable à l'eau et a préférablement une épaisseur de 10 à 60 mm, le revêtement routier ayant préférablement une résistance à la compression d'au moins 1,4 MPa, préférablement d'au moins 2,0 MPa, et idéalement d'au moins 2,6 MPa, une résistance à la traction d'au moins 0,8 MPa, préférablement d'au moins 2,0 MPa, et idéalement d'au moins 1,5 MPa, et un module d'élasticité en compression d'au moins 0,1 GPa.

14. Revêtement routier comprenant plusieurs couches, avec une couche de revêtement routier selon la revendication 13 disposée sur une couche de substrat routier, préférablement de l'asphalte, dans lequel le substrat routier ainsi que les couches de revêtement routier sont perméables à l'eau et poreux, dans lequel préférablement la couche de revêtement routier a une épaisseur de couche de 10 à 60 mm, préférablement de 10 à 50 mm, plus préférablement de 10 à 40 mm, et le substrat routier poreux, préférablement de l'asphalte poreux, a une épaisseur de 10 à 80 mm, préférablement de 20 à 60 mm, plus préférablement de 30 à 60 mm ou de 40 à 60 mm.

15. Utilisation d'un système de liant polyuréthane à deux constituants contenant des constituants biosourcés pour des compositions de revêtement routier selon l'une quelconque des revendications 1 à 10, dans laquelle le système de liant polyuréthane contenant des constituants biosourcés comprend un polyol P1 et un polyisocyanate P2, dans laquelle le polyol P1 contient au moins un polyol naturel dans une quantité de 10 à 90 % en poids, plus préférablement de 50 à 85 % en poids, et idéalement de 70 à 80% en poids, relativement à la quantité totale de polyol P1, ledit polyol naturel étant choisi parmi des huiles végétales naturelles qui contiennent des groupes fonctionnels OH n'ayant pas réagi, préférablement de l'huile de ricin, ou des polyols qui sont des huiles naturelles modifiées chimiquement, préférablement de l'huile de ricin, de l'huile de soja, de l'huile de colza, de l'huile de noix de coco, de l'huile d'arachide ou de l'huile de canola modifiées, ledit système de liant polyuréthane à deux constituants contenant des constituants biosourcés, après le durcissement, ayant une densité de réticulation X, définie comme le nombre de moles de chaînes de réseau élastiquement actives par volume, de 0,1 à 2 mmoles/cm³, préférablement de 0,1 à 1,7 mmoles/cm³, et plus préférablement de 0,1 à 1,5 mmoles/cm³.
